# EUROPEAN PATENT APPLICATION

(11) **EP 4 627 947 A1**
(43) Date of publication of application: **08.10.2025**
(21) Application number: 24182703.9
(22) Date of filing: 17.06.2024
(51) Int. Cl.: A24F 40/42

(54) **AEROSOL PROVISION DEVICE AND SYSTEM**

(30) Priority: 02.04.2024 CN 202410395243
(71) Applicant: Nicoventures Trading Limited, London WC2R 3LA (GB)
(72) Inventor: XIAO, Zhihuang, London (GB); LIN, Hao, Shanghai (CN)
(74) Representative: Whiting, Gary

(57) **Abstract**

An aerosol provision device is described comprising a near-field communication interface for over-writing data stored in a memory of a near-field communication tag, wherein the near-field communication tag forms part of an article of an aerosol provision system, and wherein the non-combustible aerosol provision system is configured to use said data to control one or more aspects of functionality of the non-combustible aerosol provision system. The device is configured to over-write said data based on a storage duration of the article.

## Description

### Technical Field

The present specification relates to aerosol provision systems, control devices for said aerosol provision systems, devices for communicating with said control devices, and methods of communicating between said systems and devices.

### Background

Aerosol provision devices are known that produce an aerosol during use, which is inhaled by a user. For example, tobacco heating devices heat an aerosol generating substrate (such as tobacco) to form an aerosol by heating, but not burning, the substrate. There remains a need for further developments in this field.

### Summary

In a first aspect, this specification describes a device (e.g. a device for configuring an aerosol provision system), the device comprising: a near-field communication interface for over-writing data stored in a memory of a near-field communication tag, wherein the near-field communication tag forms part of an article of an aerosol provision system, and wherein the non-combustible aerosol provision system is configured to use said data to control one or more aspects of functionality of the non-combustible aerosol provision system; wherein said device is configured to over-write said data based on a storage duration of the article. The device may be a point-of-sale device. The device may be configured to read said data prior to over-writing the data.

In some example embodiments, the device is configured to determine the storage duration of the article based, at least in part, on storage date data stored by said near-field communication tag. The device may be configured to obtain: said storage date data; and current time data, wherein said storage duration is based, at least in part, on said storage data and said current time data. The device may be configured to obtain said current time data from an internal clock and/or from a networked clock.

In some example embodiments, the device is configured to determine or estimate from said storage duration, a change in one or more properties of the article, wherein said over-writing is based, at least in part, on the determined or estimated change. The one or more properties of the article may include a quantity or concentration of one or more active substances of the article. Alternatively, or in addition, the one or more properties of the article may include a quantity or concentration of one or more active flavourants of the article.

In some example embodiments, the data that the device is configured to over-write represents an amount of use in a non-combustible aerosol provision system that can be sustained by the article. The amount of use of the non-combustible aerosol provision system may comprise one or more of: a duration over which the non-combustible aerosol provision system provides aerosol; a number of times that the non-combustible aerosol provision system provides aerosol; and/or a number of times a user puffs on the non-combustible aerosol provision system.

The article may be a consumable or replaceable pod of the aerosol provision system.

Alternatively, or in addition, the article may be a pack containing one or more consumables or replaceable pods, each consumable or pod comprising at least one aerosol generating medium.

In a second aspect, this specification describes a method (e.g. a method for configuring an aerosol provision system), the method comprising: determining a storage duration of an article of a non-combustible aerosol provision system, said article comprising a near-field communication tag having a memory storing data, said data being usable to control one or more aspects of functionality of said non-combustible aerosol provision system; and over-writing said data based on said storage duration.

The method may further comprise obtaining storage date data stored by the memory of said near-field communication tag, wherein the determining of said storage duration is based upon current time data and said storage date data. The method may further comprise obtaining said current time data from an internal clock and/or from a networked clock.

The method may further comprise determining or estimating, from said storage duration, a change in one or more properties of the article, wherein said over-writing of said data is based, at least in part, on the determined or estimated change. In some example embodiments, said one or more properties of the article may include a quantity or concentration of one or more active substances and/or or one or more active flavourants of the article.

In some example embodiments, the data being over-written represents an amount of use in a non-combustible aerosol provision system that can be sustained by the article.

In a third aspect, this specification describes computer-readable instructions which, when executed by a computing apparatus, cause the computing apparatus to perform (at least) any method as described herein (including the method of the second aspect described above).

In a fourth aspect, this specification describes a computer-readable medium (such as a non-transitory computer-readable medium) comprising program instructions stored thereon for performing (at least) any method as described herein (including the method of the second aspect described above).

In a fifth aspect, this specification describes an apparatus comprising: at least one processor; and at least one memory including computer program code which, when executed by the at least one processor, causes the apparatus to perform (at least) any method as described herein (including the method of the second aspect described above).

In a sixth aspect, this specification describes a computer program comprising instructions for causing a device of a non-combustible aerosol provision system to perform at least the following: determining a storage duration of an article of the non-combustible aerosol provision system, said article comprising a near-field communication tag having a memory storing data, said data being usable to control one or more aspects of functionality of said non-combustible aerosol provision system; and over-writing said data based on said storage duration.

### Brief Description of the Drawings

Example embodiments will now be described, by way of example only, with reference to the following schematic drawings, in which:
FIG. 1 is a schematic drawing of a non-combustible aerosol provision device in accordance with an example embodiment;
FIG. 2 is a block diagram of a pack configured to store replaceable articles in accordance with an example embodiment;
FIG. 3 is a side-on cross-sectional view of an article for use with a non-combustible aerosol provision device, such as the device of FIG. 1;
FIG. 4 depicts an example implementation of the device of FIG. 1 with the outer cover removed and without an article for heating present;
FIG. 5 is a block diagram of a system in accordance with an example embodiment;
FIG. 6 is a block diagram of a system in accordance with an example embodiment;
FIG. 7 to 11 are block diagrams showing processes in accordance with example embodiments;
FIG. 12 is a block diagram a system in accordance with an example embodiment;
FIG. 13 is a block diagram showing a process in accordance with an example embodiment;
FIG. 14 is a block diagram of a processing system that may be used to implement one or more of the example embodiments described previously; and
FIG. 15 is a schematic drawing of a non-combustible aerosol provision device in accordance with an example embodiment.

### Detailed Description

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise one or more active substances and/or flavours, one or more aerosol-former materials, and optionally one or more other functional material.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

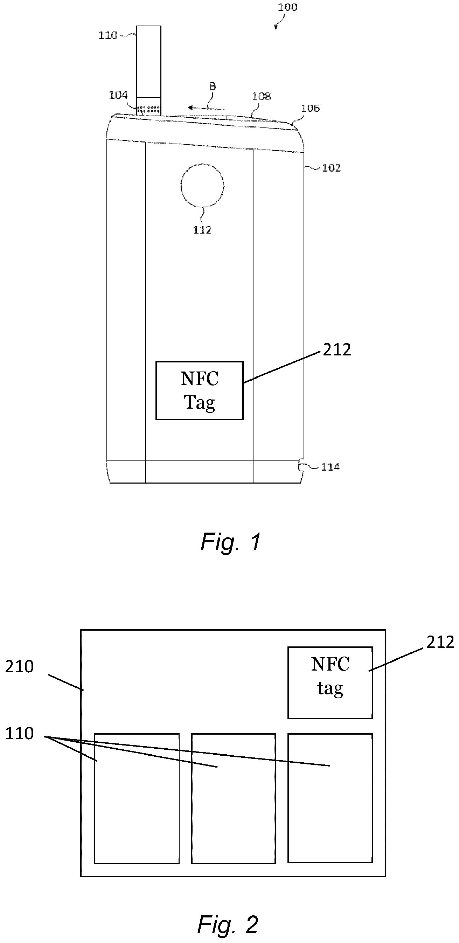

FIG. 1 is a schematic drawing of a non-combustible aerosol provision device, indicated generally by the reference numeral 100, in accordance with an example embodiment.

The device 100 is an example of a non-combustible aerosol provision device for generating aerosol from an aerosol generating medium/material. In broad outline, the device 100 may be used to heat a replaceable article 110 comprising an aerosol generating medium to generate an aerosol or other inhalable medium which is inhaled by a user of the device 100. The device 100 and replaceable article 110 together form a system.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heater assembly.

The device 100 of this example comprises a first end member 106 which comprises a lid 108 which is moveable relative to the first end member 106 to close the opening 104 when no article 110 is in place. In FIG. 1, the lid 108 is shown in an open configuration, however the lid 108 may move into a closed configuration. For example, a user may cause the lid 108 to slide in the direction of arrow "B".

The device 100 may also include a user-operable control element 112, such as a button or switch, which operates the device 100 when pressed. For example, a user may turn on the device 100 by operating the switch 112. In other examples (discussed further below), switch 112 has different or additional functions, such as causing the device to provide aerosol.

The device 100 may also comprise an electrical component, such as a socket/port 114, which can receive a cable to charge a battery of the device 100. For example, the socket 114 may be a charging port, such as a USB charging port.

The device 100 may also comprise a near-field communication (NFC) tag 212 that is configured to be readable by an NFC reader of another device, as discussed in detail below.

NFC tag 212 is configured to provide information to an NFC reader. The tag 212 may comprise an NFC chip, a memory and an antenna. Tag 212 may be a passive device that receives power from a prompt provided by an NFC reader. A prompt from an NFC reader may cause tag 212 to transmit data stored in the memory of tag 212 to the reader. The memory of tag 212 may also be wirelessly writable by an NFC reader and may also be wirelessly re-writable by an NFC reader, as discussed in detail below.

In this specification, information may be described as being stored in a memory of an NFC tag, and it is envisioned that this information could be stored in an encoded form. Where information is stored in an encoded form either the NFC tag, the NFC reader, or a device in communication with the NFC reader may be relied upon to decode the information. In some example embodiments, a lookup table could be required to access the information stored in the tag, or some of the information stored in the tag. For example, a tag storing a date of manufacture of an article 110 and information relating to the composition of the aerosol generating medium of article 110 may store the date of manufacture in a format from which it may be recovered without the use of a lookup table, and may store an identifier of the composition from which the composition may be determined by referencing a lookup table stored in a memory separate from the memory of tag 212.

FIG. 2 is a block diagram of a pack 210 configured to store replaceable articles 110 for use in device 100 (or a similar device) in accordance with an example embodiment. The pack 210 of Fig. 2 is shown storing three replaceable articles 110, but it is envisioned that pack 210 could be configured to store any particular number of replaceable articles. The pack may be configured to store one or more articles 110, but in practice it will generally be more efficient from a material usage perspective to store a plurality of articles 110 in pack 210.

The pack 210 of FIG. 2 comprises an NFC tag 212. In other example embodiments, the NFC tag forms part of the replaceable article 110. In some example embodiments at least one of article 110, pack 210, and device 100 comprise NFC tag 212.

In some example embodiments, pack 210 comprises NFC tag 212 and device 100 does not, while in other example embodiments device 100 comprises NFC tag 212 and pack 210 does not. In further example embodiments, both pack 210 and device 100 include NFC tag 212. In some example embodiments, the NFC tag forms part of the replaceable article 110.

In examples of device 100 that comprise NFC tag 212, the memory of tag 212 may store information relevant to that device. In examples of pack 210 or articles 110 that comprise NFC tag 212, the memory of tag 212 may store information relevant to the pack 210 or the articles 110 stored therein, such as a date of manufacture, properties of the aerosol generating medium of articles 110, and/or an identifier associated with those properties (for example, properties or combinations of properties could be associated with particular identifiers, and, if necessary, the properties themselves could be derivable from the identifiers using reference material, such as a lookup table). Properties of the aerosol generating medium of articles 110 may, for example, include the physical and/or chemical makeup of the aerosol generating medium. Properties of the aerosol generating medium of articles 110 may include the regulatory status of the aerosol generating medium in a particular jurisdiction or group of jurisdictions, or information associated with the regulatory status of the aerosol generating medium in a particular jurisdiction or group of jurisdictions. The skilled person will be aware of other data that may be stored instead of, or in addition, to any of the data discussed above.

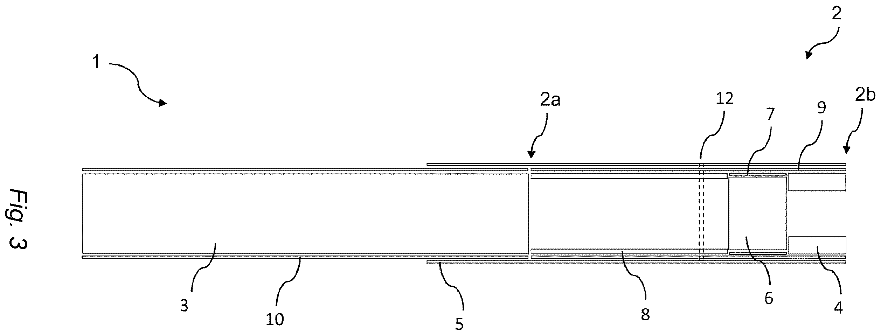

FIG. 3 is a side-on cross-sectional view of an article, indicated generally by the reference numeral 1, for use with a non-combustible aerosol provision device, such as the device 100 described above. The pack 210 described above may contain a plurality of articles 1. The article 1 is therefore an example implementation of the removable article 110 described above.

The article 1 comprises a mouthpiece 2, and a cylindrical rod of aerosol generating material 3 (e.g. tobacco material) connected to the mouthpiece 2. The aerosol generating material 3, also referred to herein as an aerosol generating substrate 3, comprises at least one aerosol forming material (such as glycerol). In alternative examples, the aerosol forming material can be another material as described herein or a combination thereof. The aerosol forming material has been found to improve the sensory performance of the article, by helping to transfer compounds such as flavour compounds from the aerosol generating material to the consumer.

The part of the mouthpiece which comes into contact with a consumer's lips may be a paper tube, which is either hollow or surrounds a cylindrical body of filter material.

As shown in FIG. 3, the mouthpiece 2 of the article 1 comprises an upstream end 2a adjacent to the aerosol generating substrate 3 and a downstream end 2b distal from the aerosol generating substrate 3. At the downstream end 2b, the mouthpiece 2 has a hollow tubular element 4 formed from filamentary tow. This has advantageously been found to significantly reduce the temperature of the outer surface of the mouthpiece 2 at the downstream end 2b of the mouthpiece which comes into contact with a consumer's mouth when the article 1 is in use. In addition, the use of the tubular element 4 has also been found to significantly reduce the temperature of the outer surface of the mouthpiece 2 even upstream of the tubular element 4.

In the present example, the article 1 has an outer circumference of about 21 mm (i.e. the article is in the demi-slim format). In other example embodiments, the article can be provided in other formats.

The outer circumference of the mouthpiece 2 is substantially the same as the outer circumference of the rod of aerosol generating material 3, such that there is a smooth transition between these components. In the present example, the outer circumference of the mouthpiece 2 is about 20.8mm. A tipping paper 5 is wrapped around the full length of the mouthpiece 2 and over part of the rod of aerosol generating material 3 and has an adhesive on its inner surface to connect the mouthpiece 2 and rod 3. In the present example, the tipping paper 5 extends 5 mm over the rod of aerosol generating material 3 but it can alternatively extend by other lengths. The tipping paper 5 can have a basis weight which is higher than the basis weight of plug wraps used in the article 1, for instance a basis weight of 40 gsm to 80 gsm. The outer circumference of the tipping paper 5, once wrapped around the mouthpiece 2, is about 21mm.

The mouthpiece 2, in the present example, includes a body of material 6 upstream of the hollow tubular element 4, in this example adjacent to and in an abutting relationship with the hollow tubular element 4. The body of material 6 and hollow tubular element 4 each define a substantially cylindrical overall outer shape and share a common longitudinal axis. The body of material 6 is wrapped in a first plug wrap 7.

In the present example the hollow tubular element 4 is a first hollow tubular element 4 and the mouthpiece includes a second hollow tubular element 8, also referred to as a cooling element, upstream of the first hollow tubular element 4.

The second hollow tubular element 8 is located around and defines an air gap within the mouthpiece 2 which acts as a cooling segment. The air gap provides a chamber through which heated volatilised components generated by the aerosol generating material 3 flow.

In the present example, the first hollow tubular element 4, body of material 6 and second hollow tubular element 8 are combined using a second plug wrap 9 which is wrapped around all three sections.

In the present example, the aerosol generating material 3 is wrapped in a wrapper 10. The wrapper 10 can, for instance, be a paper or paper-backed foil wrapper. The wrapper may comprise aluminium foil.

The aerosol generating material 3 may be provided as a cylindrical rod of aerosol generating material, for example having a length of about 10 mm to 100 mm. The aerosol generating material or substrate may be formed from tobacco material as described herein, which includes a tobacco component. In the tobacco material described herein, the tobacco component may contain paper reconstituted tobacco. The tobacco component may also contain leaf tobacco, extruded tobacco, and/or bandcast tobacco. The tobacco material may be provided in the form of cut rag tobacco.

In the tobacco material described herein, the tobacco material may contain a filler component. The filler component is generally a non-tobacco component, that is, a component that does not include ingredients originating from tobacco.

In the tobacco material described herein, the tobacco material contains an aerosol forming material. In this context, an "aerosol forming material" is an agent that promotes the generation of an aerosol. An aerosol forming material may promote the generation of an aerosol by promoting an initial vaporisation and/or the condensation of a gas to an inhalable solid and/or liquid aerosol. In some embodiments, an aerosol forming material may improve the delivery of flavour from the aerosol generating material. In general, any suitable aerosol forming material or agents may be included in the aerosol generating material of the invention, including those described herein. Other suitable aerosol forming materials include, but are not limited to: a polyol such as sorbitol, glycerol, and glycols like propylene glycol or triethylene glycol; a non-polyol such as monohydric alcohols, high boiling point hydrocarbons, acids such as lactic acid, glycerol derivatives, esters such as diacetin, triacetin, triethylene glycol diacetate, triethyl citrate or myristates including ethyl myristate and isopropyl myristate and aliphatic carboxylic acid esters such as methyl stearate, dimethyl dodecanedioate and dimethyl tetradecanedioate. In some embodiments, the aerosol forming material may be glycerol, propylene glycol, or a mixture of glycerol and propylene glycol. Glycerol may be present in an amount of from 10 to 20 % by weight of the tobacco material, for example 13 to 16 % by weight of the composition, or about 14% or 15% by weight of the composition. Propylene glycol, if present, may be present in an amount of from 0.1 to 0.3% by weight of the composition.

The aerosol forming material may be included in any component, for example any tobacco component, of the tobacco material, and/or in the filler component, if present. Alternatively or additionally the aerosol forming material may be added to the tobacco material separately. In either case, the total amount of the aerosol forming material in the tobacco material can be as defined herein.

The tobacco material described herein can contain an aerosol modifying agent, such as any of the flavours described herein. In one embodiment, the tobacco material contains menthol, forming a mentholated article.

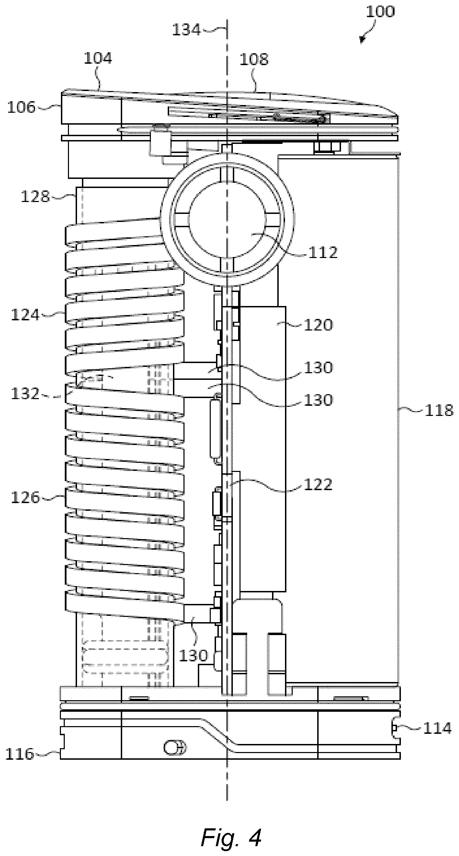

FIG. 4 depicts an example implementation of the device 100 (as shown in FIG. 1) with the outer cover 102 removed and without an article 110 present. The device 100 is provided by way of example only; the skilled person will be aware of many alternative embodiments. The device 100 defines a longitudinal axis 134.

As shown in FIG. 4, the first end member 106 is arranged at one end of the device 100 and a second end member 116 is arranged at an opposite end of the device 100. The first and second end members 106, 116 together at least partially define end surfaces of the device 100. For example, the bottom surface of the second end member 116 at least partially defines a bottom surface of the device 100. Edges of the outer cover 102 may also define a portion of the end surfaces. In this example, the lid 108 also defines a portion of a top surface of the device 100.

The end of the device closest to the opening 104 may be known as the proximal end (or mouth end) of the device 100 because, in use, it is closest to the mouth of the user. In use, a user inserts an article 110 into the opening 104, operates the user control 112 (e.g. a button) to begin heating the aerosol generating material and draws on the aerosol generated in the device. This causes the aerosol to flow through the device 100 along a flow path towards the proximal end of the device 100. Of course, the control 112 may be omitted in many example embodiments (e.g. if user draw detection is used to trigger heating).

The other end of the device furthest away from the opening 104 may be known as the distal end of the device 100 because, in use, it is the end furthest away from the mouth of the user. As a user draws on the aerosol generated in the device, the aerosol flows away from the distal end of the device 100.

The device 100 further comprises a power source 118. The power source 118 may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery. The battery is electrically coupled to the heating assembly to supply electrical power when required and under control of a controller (not shown) to heat the aerosol generating material. In this example, the battery is connected to a central support 120 which holds the battery 118 in place.

The device further comprises at least one electronics module 122. The electronics module 122 may comprise, for example, a printed circuit board (PCB). The PCB 122 may support at least one controller, such as a processor, and memory. The PCB 122 may also comprise one or more electrical tracks to electrically connect together various electronic components of the device 100. For example, the battery terminals may be electrically connected to the PCB 122 so that power can be distributed throughout the device 100. The socket 114 may also be electrically coupled to the battery via the electrical tracks. The electronics module 122 may include the NFC tag 212 (this component could be provided elsewhere).

In the example device 100, the heating assembly is an inductive heating assembly and comprises various components to heat the aerosol generating material of the article 110 via an inductive heating process. Induction heating is a process of heating an electrically conducting object (such as a susceptor) by electromagnetic induction. An induction heating assembly may comprise an inductive element, for example, one or more inductor coils, and a device for passing a varying electric current, such as an alternating electric current, through the inductive element. The varying electric current in the inductive element produces a varying magnetic field. The varying magnetic field penetrates a susceptor suitably positioned with respect to the inductive element, and generates eddy currents inside the susceptor. The susceptor has electrical resistance to the eddy currents, and hence the flow of the eddy currents against this resistance causes the susceptor to be heated by Joule heating. In cases where the susceptor comprises ferromagnetic material such as iron, nickel or cobalt, heat may also be generated by magnetic hysteresis losses in the susceptor, i.e. by the varying orientation of magnetic dipoles in the magnetic material as a result of their alignment with the varying magnetic field. In inductive heating, as compared to heating by conduction for example, heat is generated inside the susceptor, allowing for rapid heating. Further, there need not be any physical contact between the inductive heater and the susceptor, allowing for enhanced freedom in construction and application. It should be noted that whilst inductive heating is described herein, other forms of heating could be used in some example embodiments (e.g. resistive heating).

The induction heating assembly of the example device 100 comprises a susceptor arrangement 132 (herein referred to as "a susceptor"), a first inductor coil 124 and a second inductor coil 126. The first and second inductor coils 124, 126 are made from an electrically conducting material. In this example, the first and second inductor coils 124, 126 are made from Litz wire/cable which is wound in a helical fashion to provide helical inductor coils 124, 126. Litz wire comprises a plurality of individual wires which are individually insulated and are twisted together to form a single wire. Litz wires are designed to reduce the skin effect losses in a conductor. In the example device 100, the first and second inductor coils 124, 126 are made from copper Litz wire which has a rectangular cross section. In other examples the Litz wire can have other shape cross sections, such as circular. It should be noted that although two inductor coils are shown, this is not essential to all example embodiments; a single inductor coil could be provided, or more than two inductor coils could be provided.

The first inductor coil 124 is configured to generate a first varying magnetic field for heating a first section of the susceptor 132 and the second inductor coil 126 is configured to generate a second varying magnetic field for heating a second section of the susceptor 132. In this example, the first inductor coil 124 is adjacent to the second inductor coil 126 in a direction along the longitudinal axis 134 of the device 100 (that is, the first and second inductor coils 124, 126 to not overlap). The susceptor arrangement 132 may comprise a single susceptor, or two or more separate susceptors. Ends 130 of the first and second inductor coils 124, 126 can be connected to the PCB 122.

It will be appreciated that the first and second inductor coils 124, 126, in some examples, may have at least one characteristic different from each other. For example, the first inductor coil 124 may have at least one characteristic different from the second inductor coil 126. More specifically, in one example, the first inductor coil 124 may have a different value of inductance than the second inductor coil 126. In FIG. 4, the first and second inductor coils 124, 126 are of different lengths such that the first inductor coil 124 is wound over a smaller section of the susceptor 132 than the second inductor coil 126. Thus, the first inductor coil 124 may comprise a different number of turns than the second inductor coil 126 (assuming that the spacing between individual turns is substantially the same). In yet another example, the first inductor coil 124 may be made from a different material to the second inductor coil 126. In some examples, the first and second inductor coils 124, 126 may be substantially identical.

In this example, the first inductor coil 124 and the second inductor coil 126 are wound in opposite directions. This can be useful when the inductor coils are active at different times. For example, initially, the first inductor coil 124 may be operating to heat a first section/portion of the article 110, and at a later time, the second inductor coil 126 may be operating to heat a second section/portion of the article 110. Winding the coils in opposite directions helps reduce the current induced in the inactive coil when used in conjunction with a particular type of control circuit. In FIG. 4, the first inductor coil 124 is a right-hand helix and the second inductor coil 126 is a left-hand helix. However, in another embodiment, the inductor coils 124, 126 may be wound in the same direction, or the first inductor coil 124 may be a left-hand helix and the second inductor coil 126 may be a right-hand helix.

The susceptor 132 of this example is hollow and therefore defines a receptacle within which aerosol generating material is received. For example, the article 110 can be inserted into the susceptor 132. In this example the susceptor 132 is tubular, with a circular cross section.

The susceptor 132 may be made from one or more materials. Preferably the susceptor 132 comprises carbon steel having a coating of Nickel or Cobalt.

The device 100 further comprises an insulating member 128 which may be generally tubular and at least partially surround the susceptor 132. The insulating member 128 may be constructed from any insulating material, such as plastic for example. In this particular example, the insulating member is constructed from polyether ether ketone (PEEK). The insulating member 128 may help insulate the various components of the device 100 from the heat generated in the susceptor 132.

The insulating member 128 can also fully or partially support the first and second inductor coils 124, 126. For example, as shown in FIG. 4, the first and second inductor coils 124, 126 are positioned around the insulating member 128 and are in contact with a radially outward surface of the insulating member 128. In some examples the insulating member 128 does not abut the first and second inductor coils 124, 126. For example, a small gap may be present between the outer surface of the insulating member 128 and the inner surface of the first and second inductor coils 124, 126.

In a specific example, the susceptor 132, the insulating member 128, and the first and second inductor coils 124, 126 are coaxial around a central longitudinal axis of the susceptor 132.

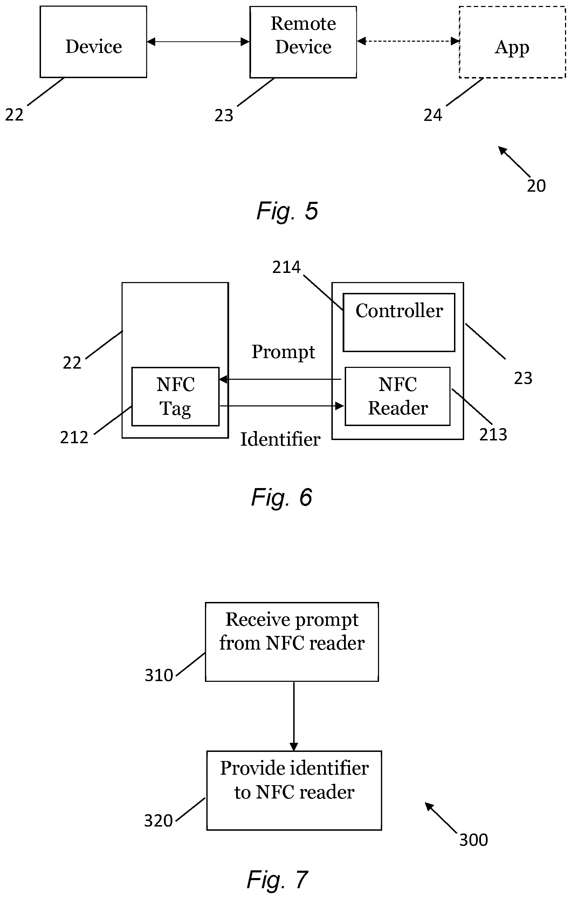

FIG. 5 is a block diagram of a system, indicated generally by the reference numeral 20, in accordance with an example embodiment. The system 20 comprises a device 22, which may be the above-described device 100 in some example embodiments, and further comprises a remote (or external) device 23. The remote device 23 is capable of two-way communication with device 22 for example through wireless technology, such as Bluetooth^{®}. The remote device may be a mobile phone, or some other mobile communication device or personal mobile computing device (such as a smartwatch or wearable device). The remote device may also be a point-of-sale device.

The system 20 may also comprise an application (app) 24. The application 24 is a computer program that may be stored in the memory of remote device 23 or may be otherwise accessible to the device 23. Application 24 comprises instructions that may be executed by remote device 23.

The device 22 may be configured to obtain user input from a user interface of the remote device 23. This may be facilitated by app 24, which may comprise instructions executable to cause a user interface to be displayed (e.g. on a display of remote device 23 or some other display in communication with remote device 23), to receive user inputs, and transmit those user inputs or instructions obtained by processing those inputs to device 22. In some example embodiments, the user interface is displayed on a touchscreen, which also serves as a user input device.

A user may control aspects of functionality of device 22 through app 24 of remote device 23. Examples of control by app 24 of aspects of functionality of device 22 are described below.

FIG. 6 is a block diagram of a system in accordance with an example embodiment. The system of FIG. 6 includes the device 22 and the remote device 23 of the system 20 described above. FIG. 6 shows the NFC tag 212 of device 22 receiving a prompt from an NFC reader 213 of the remote device 23. NFC reader 213 of the remote device 23 is further shown receiving an identifier from NFC tag 212 of the device 22. The remote device 23 includes a controller 214.

The identifier is stored in the memory of the NFC tag 212 of device 22 and identifies application 24 such that it can be distinguished from other applications. These other applications may be applications stored on remote device 23 or applications downloadable from a network such as the internet by remote device 23 (e.g. under the control of the controller 214). For example, the identifier could include a file name associated with application 24 that remote device 23 may search for in its memory if app 24 is stored on remote device 23, and/or the identifier could include a link to an address from which app 24 can be obtained if remote device 23 seeks app 24 on a network.

FIG. 7 is a block diagram of a process, indicated generally by reference numeral 300, in accordance with an example embodiment. Process 300 is a process by which an NFC tag 212 of a device, such as device 22, may provide an identifier.

At step 310, tag 212 receives a prompt from an NFC reader 213.

At step 320, and in response to receiving the prompt, tag 212 provides the reader 213 with an identifier of an application (e.g. the app 24) that is configured to control aspects of the functionality of a non-combustible aerosol provision system, such as a system comprising device 22.

Tag 212 may be a passive device, with no internal power source, and in this case tag 212 may receive from the prompt at step 310 the power needed to provide the identifier at step 320.

The memory of tag 212 may store additional information, in addition to the identifier, and this may also be provided to the NFC reader 213 at step 320.

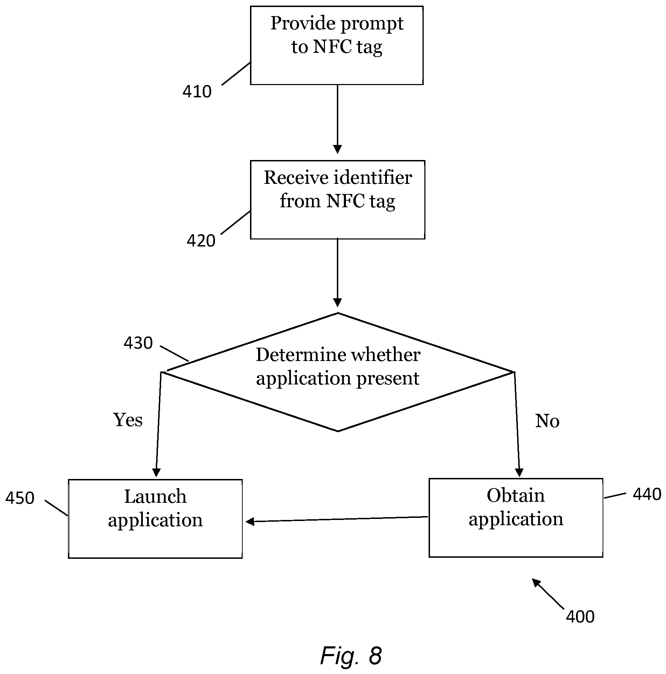

FIG. 8 is a block diagram of a process, indicated generally by reference numeral 400, in accordance with an example embodiment. Process 400 is a process by which an NFC reader 213 of a device, such as remote device 23, may obtain an identifier of an application 24 and cause that application to be launched. The process 400 may be controlled by the controller 214 of the remote device 23.

At step 410 the NFC reader 213 provides a prompt to NFC tag 212. As discussed in connection with FIG. 7, if the tag 212 receives the prompt it should provide the reader 213 with an identifier, which is received by the reader 213 at step 420.

At step 430, remote device 23 determines whether an application 24 identified by the received identifier is present on (or directly available to) remote device 23.

If application 24 is not present on (or directly available to) remote device 23, remote device obtains application 24 at step 440. At step 440 application 24 could be obtained from the internet, or from another file location in a network with remote device 23. At step 440 remote device 23 may display a user interface to the user, which in some examples may be an interface on a web browser, and prompt the user to initiate a download or authorise a download of application 24. In other examples, application 24 could be obtained by remote device 23 with no further input from a user.

At step 450, at which point remote device has either determined (at step 430) that application 24 is present on remote device 23 or has obtained application 24 (at step 440), application 24 is launched. Remote device 23 may prompt the user to authorise the launching of application 24 at this stage.

Through application 24 a user may control aspects of the functionality of device 22, or review information relating to device 22.

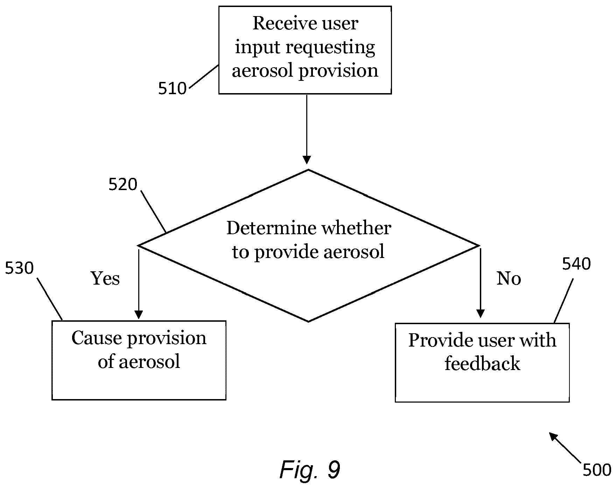

FIG. 9 is as block diagram of a process, indicated generally by reference numeral 500, in accordance with an example embodiment by which device 22 may determine whether to provide aerosol.

At step 510, the device receives user input requesting the provision of aerosol. This user input may be in the form of user interaction with a button on device 22 (such as the user-operable control element 112 of the device 110 described above), or another device in communication with device 22, or device 22 may detect a user drawing on the device 22. A user drawing action is a sucking/inhaling action made by the user at a mouthpiece of device 22, which could for example be detected through a pressure change in a portion of device 22.

At step 520, device 22 determines whether to provide aerosol. In some embodiments device 22 may be in a locked or unlocked state, and this may determine whether device 22 provides aerosol. For example, in some example embodiments, the device 22 will not provide aerosol when in the locked state and may provide aerosol when in an unlocked state. The locked or unlocked state may be stored in a memory of device 22. Additionally, or alternatively, device 22 may perform other checks before providing aerosol. For example, in embodiments in which device 22 is capable of checking the authenticity of replaceable consumables used with the device, the device may determine that aerosol should not be provided even if the device is in an unlocked state based on detecting an inauthentic replaceable consumable.

In other embodiments, device 22 may be in communication with another device such as remote device 23, and some or all of the determining at step 520 may be performed by remote device 23. In some example embodiments, information on the locked or unlocked state of device 22 is stored in a memory of remote device 23, rather than (or in addition to) in a memory of device 22.

At step 530, device 22 causes the provision of aerosol upon determining that aerosol should be provided.

At step 540, device 22 causes feedback to be provided to the user in some examples. For example, if device 22 is in communication with a remote device 23 having a display, the display could inform a user of the reason for not providing aerosol.

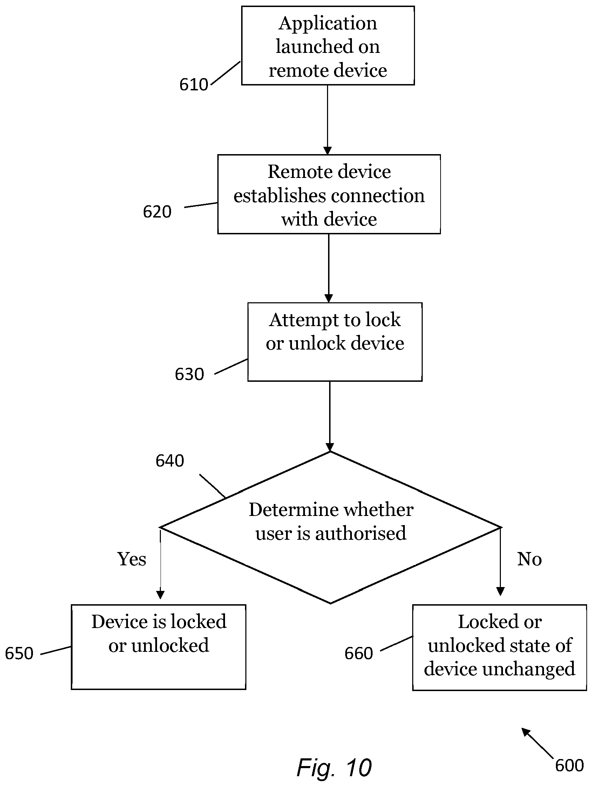

FIG. 10 is a block diagram of an example process, indicated generally by reference numeral 600, in accordance with an example embodiment by which locking or unlocking of the device 22 may be controlled. The process 600 may be controlled by the controller 214.

At step 610, application 24 is launched on remote device 23. This process may follow the application launching process 400.

At step 620, remote device 23 establishes a connection with device 22. This may be a two-way connection, such as that shown in FIG. 5. In some example implementations of the step 620, remote device 23 may automatically seek to establish a connection with device 22 upon launching the application; alternatively, a user may prompt remote device 23 to seek to establish a connection.

At step 630, an attempt to lock or unlock device 22 is initiated. At this step, the user may prompt one of the devices to begin this attempt, or this attempt may begin automatically. At this step, a user may provide input to verify that they are authorised. In some examples, application 24 prompts the user to scan an identification document (e.g. a passport or driving licence). A pre-authenticated digital signature stored on the remote device 23 (which may be user's phone and he/she has added the fingerprint as example for other purposes) may be used to automatically unlock the device 22, in this case the user might not have to provide input on the application 24 again.

Device 23 may be a point-of-sale device, and a cashier or attendant at the point-of-sale device may operate remote device 23 (which may be the point-of-sale device), to unlock a user's device 22, for example by scanning an identification document provided by a customer to unlock device 22 on the customer's behalf. In examples in which remote device 23 is a personal device, biometrics may be used to verify that a previously authorised person is using remote device 23.

At step 640, remote device 23 determines whether the user is authorised to lock or unlock device 22. This determination may be based on information provided by the user at step 630. In some example embodiments, a user attempting to unlock device 22 may be required to verify that they are authorised (e.g. by scanning identification), while a user attempting to lock device 22 may not. Where remote device 23 is operated by a cashier or attendant at a point-of-sale device, it may be the purchased of device 22 that must be authorized.

At step 650, when remote device 23 has determined that the user attempting to unlock device 22 is authorised, device 22 is unlocked. Device 22 may be unlocked by overwriting or writing to a memory of device 22, for example, to a memory that may be accessed in the course of process 500. Similarly, the device may be locked when it is determined that a user attempting to lock the device is suitably authorised, either by writing to a memory of device 22 or disabling certain function inside the device 22 (for example by disabling the NFC reader or disabling the power to certain functions on the device which eventually puts it into a sleep mode).

At step 660, remote device 23 has determined that the user is not authorised, and the locked or unlocked state of device 22 is unchanged. Remote device 23 may inform the user of the reason for device 22 not being unlocked.

In some example embodiments, the device 22 is manufactured in a locked state, and is unlockable by the user, but cannot be locked again. In other example embodiments device 22 returns to a locked state after a fixed period, or a fixed period of inactivity has passed. The skilled person will be aware of other locking configurations that could be implemented.

Device 22 having a locked state and unlocked state and being unlockable using a remote device 23 provides a mechanism by which unauthorized users can be prevented from using the device 22. For example, in jurisdictions in which the age of a user of device 22 must be confirmed before the device 22 may be sold to (or used by) a prospective user, providing only locked devices 22 at a point-of-sale (for example by manufacturing devices in a locked state), ensures that a suitable unlocking procedure is carried out (e.g. by the user or during a sales process). By tailoring the unlocking process to a particular jurisdiction (for example, by adapting how the user is authorised by the app 24 run by the remote device 23, or how the user is authorised by a remote device that is a point-of-sale), it is possible to ensure that a user is suitably authorised to use device 22 in accordance with the requirements of that jurisdiction before the device can be operated to provide aerosol.

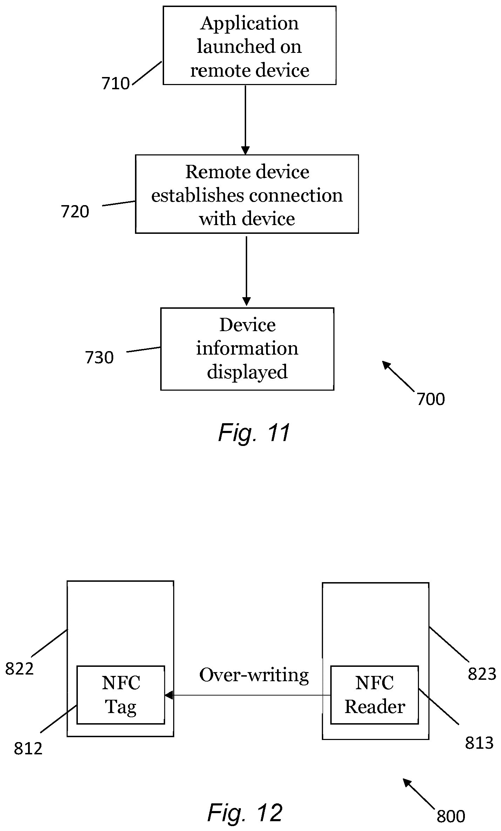

FIG. 11 is a block diagram of an example process, indicated generally by reference numeral 700, in accordance with an example embodiment by which information relating to device 22 may be displayed using remote device 23.

At step 710, application 24 is launched on remote device 23. This process may follow the application launching process 400.

At step 720, remote device 23 establishes a connection with device 22. This may be a two-way connection, such as that shown in FIG. 5. In implementation of the step 720, the remote device 23 may automatically seek to establish a connection with device 22 upon launching the application, or a user may prompt remote device 23 to seek to establish a connection.

At step 730, the remote device 23 retrieves information regarding device 22 and displays this to the user. This display may be a display of the remote device 23. This display may include a user interface of application 24. The displayed data may include a measure of the remaining uses of device 22 before a consumable must be replaced and/or information regarding the heating temperature profile of device 22. In some examples the user may interact with the display to adjust settings, such as the heating temperature profile of device 22, through a user interface of app 24 running on remote device 23.

The heating temperature profile of device 22 may consist of a set of parameters describing how device 22 produces heat to generate aerosol. For example, the heating temperature profile may include one or more of a heating duration, heating power, or a heating maximum temperature. The heating power and/or heating maximum temperature may be controlled over time to follow a particular pattern or curve, so the heating temperature profile may define a heating power and/or maximum temperature that device 22 will achieve at a particular point in the operation of the device.

FIG. 12 is a block diagram an example system, indicated generally by reference numeral 800, in accordance with an example embodiment. The system 800 comprises a device 822 and further device 823, which may be a point-of-sale device. As discussed further below, the system 800 may be used for over-writing data of a memory of an NFC tag 812 of the device 822. The further device 823 may include a controller, similar to the controller 214 described above.

Device 822 is a device of a non-combustible aerosol provision system having a memory storing data that device 822 is configured to use to control one or more aspects of functionality of the non-combustible aerosol provision system.

In some example embodiments, device 822 comprises all of the components required for the non-combustible aerosol provision system to provide aerosol. In other example embodiments, device 822 comprises a subset of the components required for the non-combustible aerosol provision system to provide aerosol. In some example embodiments, device 822 comprises one or more reusable parts removably attached to one or more replaceable parts. The replaceable parts may be provided as part of a consumable that is expected to be used for a shorter time than the reusable parts. A replaceable part or consumable may comprise parts that are depleted, degraded, or exhausted in the course of providing aerosol, such as an aerosol generating medium. A replaceable part or consumable may be depleted, degraded, or exhausted significantly faster than a reusable part. For example, a reusable part may be expected to remain useable for ten or more times as long as a replaceable part.

In some example embodiments, the device 822 is a replaceable part (e.g. a consumable) of a non-combustible aerosol provision system. For example, device 822 may be a "pod" comprising an aerosol generating medium, that aerosolises to provide aerosol during use of the system.

In other example embodiments, the device 822 is a pack comprising one or more replaceable parts of a non-combustible aerosol provision system. For example, device 822 could be a pack of pods or consumables.

Device 822 of an aerosol generating medium may be able to sustain an amount of use in a non-combustible aerosol provision system. This amount of use may be known or reliably estimated (e.g. within an acceptable tolerance) at the date of manufacture of the device. This amount of use may be stored in as data in a memory of an NFC tag of device 822. This amount of use data may be written to the memory during manufacture of device 822, or a tag could be applied to device 822 with this data already stored therein.

In some example embodiments, an amount of use that can be sustained by device 822 may represent an amount of aerosol that could be produced by the non-combustible aerosol provision system while device 822 is in use in the system. In other examples, an amount of use represents a period of time over which a system using device 822 can produce aerosol when operating in a particular manner. In further examples, an amount of use represents a number of uses of the system that can take place while device 822 is used. For example, a user input may result in the non-combustible aerosol provision system providing a standardised "puff" of aerosol, which may be produced by heating for a particular temperature for a particular duration, or by heating using a predefined temperature-time profile.

In other example embodiments, it may not be a volume of produced aerosol that is represented by an amount of use. A user of a non-combustible aerosol provision system may be more concerned with the amount of one or more flavourants (or perceived flavour) or the amount of one or more active substances (or the perceived effects of the one or more active substances) in the aerosol produced than in the volume of aerosol produced.

Therefore, in other example embodiments, an amount of use may represent a given amount of an active substance (such as nicotine) or flavourant that may be provided by the non-combustible aerosol provision system. In other examples, an amount of use represents a period of time over which a system using device 822 can produce aerosol containing a particular amount of nicotine or flavourant. In further examples, an amount of use represents a number of uses of the system, where each use results in the provision of a particular amount of active substance or flavourant. For example, a user input may result in a standardised "puff" that contains a particular amount of active substance or flavourant.

A non-combustible aerosol provision system may use this amount of use data to control functionality of the system. For example, this data may be used to control when the system will stop attempting to provide more aerosol while device 822 is being used in the system. This could be done by reading from the memory of device 822 an amount of use represented by a numerical value, and decrementing this value based on use of device 822 until the value is zero and preventing further use of device 822 once the value reaches zero.

In some examples in which the amount of use data represents an amount of active substance or flavourant, the heating temperature, heating duration, or heating temperature-time profile could be adjusted to keep the amount of active substance or flavourant provided by the aerosol provision device constant or closer to constant for a given user input. For example, where a user input results in a "puff", the heating temperature, heating duration, or heating temperature-time profile could be adjusted based on the amount of use data, which may change the volume of aerosol produced so that the amount of active substance or flavourant is kept closer to a particular value.

Parts of non-combustible aerosol provision systems may degrade or change after manufacturing, even when unused and in storage. For example, depending upon the storage conditions, oxidation may affect substances in the aerosol generating medium.

Therefore, if two instances of device 822 are manufactured on different dates, they may be different due to having different storage durations even if they were identical on their respective dates of manufacture. Therefore, if these two instances of device 822 have been stored for very different durations, one may have very significantly different properties to the other and each may provide a different experience to an end user. These two devices could not therefore be considered equivalent to each other and selling these devices 822 as equivalents may cause customer dissatisfaction.

One method of ensuring that different users experiences using device 822 are consistent includes assigning device 822 an expiry date after which it must be discarded. However, this practice is wasteful, as device 822 may remain useable even after a long storage period, even if it is not equivalent to a newly manufactured device 822.

The effect of different storage durations on device 822 may be determined empirically and used to predict how properties of device 822 have changed compared to the date of manufacture. These properties can include the amount of substances in an aerosol generating medium of device 822, for example including amounts of active substances, flavourants, or aerosol-former materials. These properties may be expressed in terms of measurable quantities such as concentration of a substance in an aerosol generating medium, total volume of a substance, molar amount of substance, etc. Thus, the amount of use of device 822 in a non-combustible aerosol provision system that may be sustained (whether this is measured in terms of volume of aerosol, or amount of active substance or flavourant, or otherwise) may be predictable based on the storage duration of the device and the known properties of the device on its date of manufacture.

Therefore, by updating amount of use data in the memory of the NFC tag 812 of device 822, the functionality of the non-combustible aerosol provision system may be differently controlled based on the data to ensure that some aspect of the user experience is consistent with the experience using a more recently manufactured device 822. For example, where the amount of use represents a volume of aerosol, the functionality (such as the heating temperature, duration, or temperature-time profile) could be adjusted to ensure that the same user inputs produce the same amount of aerosol. In other example embodiments, if the non-combustible aerosol provision system is capable informing the user of the amount of aerosol production that may be sustained by device 822 (for example, using a display of a non-combustible aerosol provision system), the displayed amount of aerosol production remaining can be made more consistent with a more recently manufactured device. In examples in which the amount of use represents an amount of active substance or flavourant, the user experience of active substance or flavour can be kept more consistent by correspondingly controlling the functionality of the system, to ensure the same user inputs result in the provision of a comparable amount of active substance or flavourant, and/or by ensuring that any information provided to the user regarding the amount of use remaining is consistent with that provided by a more recently manufactured device that has the same amount of use remaining.

By providing a more consistent user experience, but for a smaller number of uses/amount of use, device 822 can be marketed to a user as providing a similar experience (for a smaller number of uses/amount of use) to a newly manufactured device 822 even after a long storage duration, providing a use for a device 822 that may otherwise be discarded.

To enable the storage duration of device 822 to be determined more conveniently, the NFC tag of device 822 may store in its memory storage date data, from which a date of manufacture, a date of entry into long term storage, or another relevant date may be recovered.

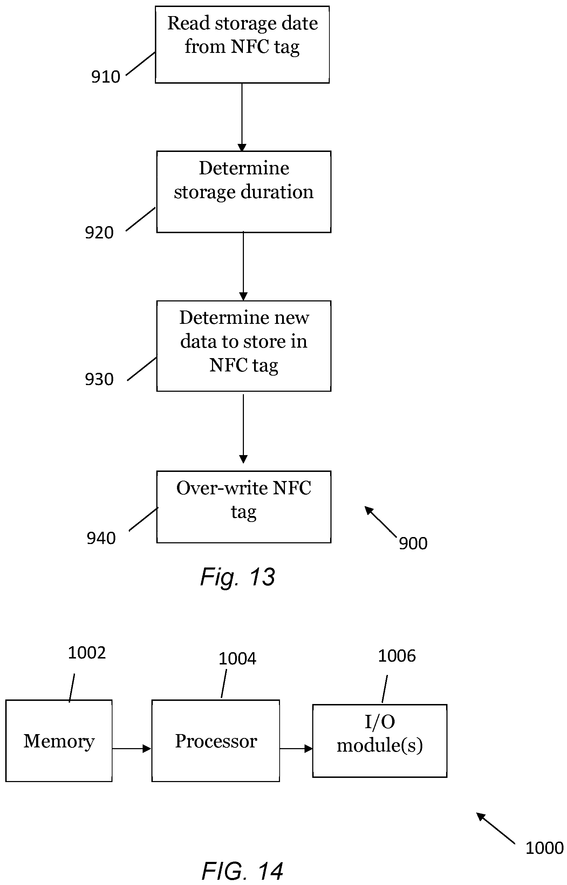

Updating the amount of use data may be performed by the device 823, which may be a point-of-sale device, or another device which may be used in a shop, stockroom, or warehouse, such as a mobile computing device (e.g. a tablet or mobile phone). Device 823 comprises an NFC reader. Further details of a process or updating/overwriting data of device 823 are described below with reference to FIG. 13.

FIG. 13 is a block diagram of a process, indicated generally by reference numeral 900, in accordance with an example embodiment. The process 900 may be used for over-writing data of a memory of an NFC tag of device 822.

At step 910, the NFC reader 813 of point-of-sale device 823 reads a storage date from the memory of the NFC tag 812 of device 822. As discussed in connection with FIG. 7 and FIG. 8, the NFC reader 813 may retrieve data by providing a prompt that is received by NFC tag 812, that may provide power to tag 812 and instruct NFC tag 812 to send data stored in a memory of NFC tag 812 to the reader 813.

At step 920, a storage duration of device 822 is determined. In order to determine a storage duration, current date and time information may be used (referred to as "current time data"). In some example embodiments, device 823 has an internal clock, and compares the storage date data to current time data provided by the internal clock to determine a storage duration. In other example embodiments, point-of-sale device 823 is in a network with another device having a clock or otherwise providing current time information, and date information received over a network is used. It is also envisaged that device 823 may use the most accurate current time data available to it, whether this is from its own internal clock or another networked device.

The term "current time data" does not exclude data that is precise only to one day (i.e., date data). In some embodiments the "current time data" is a calendar date and is used as a basis for storage duration calculation, while in other embodiments "current time data" is a measure of date and time, or time elapsed since a particular reference point. In some example embodiments, a storage duration may be derivable purely from the data obtained in the step 910, so that the step 920 may be omitted.

At step 930, new data for storage in the NFC tag of device 822 is determined based (at least in part) on the storage duration. In some examples this new data is data representing an amount of use of device 822 as discussed in connection with FIG. 12. For example, a relationship between one or more properties of device 822 and storage duration may be determined empirically or estimated. This relationship may take the form of a mathematical expression, a lookup table of values, an algorithm, or another suitable form. A change in one or more properties of a given device 822 with the storage duration calculated at step 920 can be estimated or calculated based upon this relationship.

One or more measures of an amount of use may then be determined from the estimated properties. For example, where the amount of use is an amount of use that can be sustained while providing a particular amount of an active substance for a particular user input, a change in an amount of active substance in device 822 could be estimated from the storage duration, and an amount of use could be estimated from this.

While the above description of step 930 describes calculating intermediate values, such as a property of device 822 derived from a storage duration, these intermediate values need not be stored in memory or calculated separately, and this calculation may be performed in one step. In other embodiments the calculation is performed using a lookup table.

While a relationship between storage duration and the properties of device 822 may be used in process 900, determining said relationship need not occur in the course of process 900, and would typically occur separately.

At step 940 memory of the NFC tag 812 of device 822 is then over-written to store the new data determined at step 930. Once new data, such as data representing an amount of use, is determined, point-of-sale device 923 stores said data in the memory of the NFC tag 812 of device 822.

This data is then ready to be used to control the functionality of an aerosol provision system, which in some examples causes the system to ensure a consistent user experience as discussed in connection with FIG. 12.

FIG. 14 is a block diagram of a processing system, indicated generally by the reference numeral 1000, that may be used to implement one or more of the example embodiments described previously. The processing system 1000 may, for example, be incorporated into the devices of the claims below, and/or may implement steps of the methods claimed below.

The processing system 1000 may comprise a processor 1004, a memory 1002 coupled to the processor (e.g. comprising a random access memory (RAM) and/or a read only memory (ROM)). The processing system 1000 may also comprise one or more input/output (I/O) modules 1006, such as one or more user interface modules.

The memory 1002 may comprise code which, when executed by the processor 904 implements aspects of the methods and algorithms described herein.

The memory 1002 and the processor 1004 may form part of a controller of the remote device 23 described above. The I/O module 1006 may form part of the remote device 23.

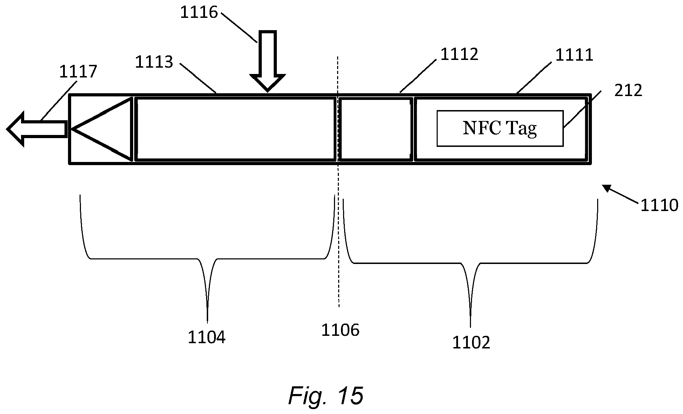

FIG. 15 is a block diagram of a non-combustible aerosol provision device, indicated generally by reference numeral 1110. As discussed above, device 100 is an example of suitable device 22 comprising NFC tag 212. Device 1110 is another example of a suitable device 22 comprising an NFC tag 212.

The device 1110 comprises a battery 1111 (e.g. a rechargeable battery), a control circuit 1112, and an aerosol generator 1113. The aerosol generator 1113 may comprise a resistive heater for heating an aerosolisable material (e.g. a film or a gel) to generate an aerosol (e.g. a vapour). The aerosolisable material is sometimes referred to an as aerosol generating material. It should be noted that the use of resistive heating of an aerosolisable material is described by way of example only. The principles described herein are applicable other aerosol provision systems (such as systems using induction heating).

In the use of the device 1110, air is drawn into an air inlet of the aerosol generator 1113, as indicated by arrow 1116. An aerosol generated by the aerosol generator 1113 exits the device at an air outlet, as indicated by arrow 1117 (for example into the mouth of a user of the device 1110).

In some example embodiments, the aerosol provision device 1110 comprises two main components, namely a control section 1102 (which may be referred to as a reusable part) and a consumable part 1104 (which may be referred to as a replaceable or disposable cartridge). In the use of the aerosol provision device 1110, the control section 1102 and the consumable part 1104 may be releasably connected at an interface 1106. The consumable part 1104 may be removable and replaceable (e.g. when the consumable part is used), with the control section 1102 being re-used with a different consumable part.

Of course, the aerosol provision device 1110 is provided by way of example only and is highly schematic. Many variants are possible. For example, in some example embodiments, air is drawn into an air inlet in the control section 1102, passes through the interface 1106, and exits the consumable part 1104. Moreover, in some example embodiments, the aerosol provision device may not be separable into two parts.

In this example device control section 1102 of device 1110 comprises NFC tag 212. In other examples it is consumable part 1104 that comprises NFC tag 212. In examples in which device 1110 is not separable into two parts NFC tag 212 may be attached to various parts of device 1110.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. A device comprising:
a near-field communication interface for over-writing data stored in a memory of a near-field communication tag, wherein the near-field communication tag forms part of an article of an aerosol provision system, and wherein the non-combustible aerosol provision system is configured to use said data to control one or more aspects of functionality of the non-combustible aerosol provision system;
wherein said device is configured to over-write said data based on a storage duration of the article.

2. A device as claimed in claim 1, wherein the device is configured to determine the storage duration of the article based, at least in part, on storage date data stored by said near-field communication tag.

3. A device as claimed in claim 2, wherein the device is configured to obtain:
said storage date data; and
current time data,
wherein said storage duration is based, at least in part, on said storage data and said current time data.

4. A device as claimed in claim 3, wherein the device is configured to obtain said current time data from an internal clock and/or from a networked clock.

5. A device as claimed in any one of claims 1 to 4, wherein the device is configured to determine or estimate from said storage duration, a change in one or more properties of the article, wherein said over-writing is based, at least in part, on the determined or estimated change.

6. A device as claimed in claim 5, wherein said one or more properties of the article include a quantity or concentration of one or more active substances of the article.

7. A device as claimed in claim 5 or claim 6, wherein said one or more properties of the article include a quantity or concentration of one or more active flavourants of the article.

8. A device as claimed in any one or claims 1 to 7, wherein the data that the device is configured to over-write represents an amount of use in a non-combustible aerosol provision system that can be sustained by the article.

9. A device as claimed in claim 8, wherein said amount of use of the non-combustible aerosol provision system comprises:
a duration over which the non-combustible aerosol provision system provides aerosol; and/or
a number of times that the non-combustible aerosol provision system provides aerosol.

10. A device as claimed in claim 8 or claim 9, wherein said amount of use of the non-combustible aerosol provision system comprises a number of times a user puffs on the non-combustible aerosol provision system.

11. A device as claimed in any one or claims 1 to 10, wherein the article is a consumable or replaceable pod of the aerosol provision system and/or a pack containing one or more consumables or replaceable pods, each consumable or pod comprising at least one aerosol generating medium.

12. A device as claimed in any one of claims 1 to 11, wherein the device is a point-of-sale device.

13. A device as claimed in any one or claims 1 to 12, wherein the device is configured to read said data prior to over-writing the data.

14. A method comprising:
determining a storage duration of an article of a non-combustible aerosol provision system, said article comprising a near-field communication tag having a memory storing data, said data being usable to control one or more aspects of functionality of said non-combustible aerosol provision system; and
over-writing said data based on said storage duration.

15. A computer program comprising instructions for causing a device of a non-combustible aerosol provision system to perform at least the following:
determining a storage duration of an article of the non-combustible aerosol provision system, said article comprising a near-field communication tag having a memory storing data, said data being usable to control one or more aspects of functionality of said non-combustible aerosol provision system; and
over-writing said data based on said storage duration.
